# EUROPÄISCHE PATENTSCHRIFT

(11) **EP 0 808 743 B1**
(45) Veröffentlichungstag und Bekanntmachung des Hinweises auf die Patenterteilung: **26.03.2003**
(21) Anmeldenummer: 97106229.4
(22) Anmeldetag: 16.04.1997
(51) Int. Cl.: B60N 2/36

(54) **Sitzanordnung in einem Kraftfahrzeug**
Seat arrangement in an automotive vehicle
Aménagement de siège d'un véhicule automobile

(30) Priorität: 23.05.1996 DE 19620877
(43) Veröffentlichungstag der Anmeldung: 26.11.1997
(73) Patentinhaber: Bayerische Motoren Werke Aktiengesellschaft, 80788 München (DE)
(72) Erfinder: Stubenberger, Andreas, 80939 München (DE); Kirchknopf, Peter, Dr., 81547 München (DE)

(56) Entgegenhaltungen:
- EP-A- 0 671 292
- DE-A- 4 230 538
- DE-A- 4 410 681
- FR-A- 2 578 793

## Beschreibung

Die Erfindung bezieht sich auf eine Sitzanordnung in einem Kraftfahrzeug der im Oberbegriff des Patentanspruchs 1 genannten und aus der EP 0 671 292 A1 hervorgehenden Art.

Bei dem aus dieser Druckschrift bekannten Kombifahrzeug sind die beiden Rückenlehnenteile der Rücksitzbank in Fahrzeuglängsrichtung verschwenkbar, wodurch der Laderaum des Kombifahrzeugs für langgestreckte Transportgüter oder dergleichen verlängert werden kann. Damit die beiden Rückenlehnenteile in der etwa lotrechten Gebrauchslage schwenkfest gehalten sind, weisen sie jeweils eine Verriegelungsvorrichtung auf. Dabei wirkt die Verriegelungsvorrichtung des ersten Rückenlehnenteils mit einem im Bereich des hinteren Randes der Rücksitzbank liegenden Scharnier zusammen, während die Verriegelungsvorrichtung des zweiten Rückenlehnenteils in eine sich an der Oberseite des Radhauses befindende Halteöse verrastend eingreift. Nachdem bei Kombifahrzeugen mit verschwenkbaren Rückenlehnenteilen keine querlaufende Trennwand zur Querversteifung der Karosserie vorhanden ist, hat diese in Fahrzeugquerrichtung gegenüber einer Karosserie mit einer Trennwand eine geringere Steifigkeit.

Aufgabe der Erfindung ist es daher, bei einer Sitzanordnung der im Oberbegriff des Patentanspruchs 1 genannten Art eine Einrichtung vorzusehen, durch welche die Fahrzeugkarosserie im Bereich der Rücksitzbank oder zweier nebeneinander liegender Sitze in Fahrzeugquerrichtung versteift wird.

Zur Lösung der Aufgabe sind die im Patentanspruch 1 dargelegten Merkmale vorgesehen.

Da von den gegenüberliegenden Karosseriewandungen erfindungsgemäß jeweils ein Anlagebolzen absteht, mit dem ein an der Rückenlehne vorgesehenes, federbelastet verschiebbares Keilelement zusammenwirkt und ferner die Rückenlehnen an einem gemeinsamen fahrzeugaufbaufesten Schwenklager gelagert sind, ist in Gebrauchslage der Rückenlehnen die Karosserie in Querrichtung drucksteif ausgebildet; denn hierdurch ist von den Karosseriewandungen über die Rückenlehnen jeweils eine zu deren gemeinsamen Schwenklager verlaufende Kraftwirklinie gebildet. Erwiesenermaßen wird hierdurch das Schwingungsverhalten der Karosseriestruktur verbessert. Ferner werden hierdurch auch entstehenden Klappergeräusche an den Rückenlehnen vermindert.

Darüber hinaus besteht auch die Möglichkeit, an den von den Karosseriewandungen abstehenden Anlagebolzen eine zur Fahrzeuglängsmittelebene hin geneigte Keilebene auszubilden, wobei mit den Anlagebolzen ein an jeder Rückenlehne federbelastet verschiebbares Anlageelement mit einer T-förmigen Aufnahmenut formschlüssig zusammenwirkt. In Gebrauchslage der Rückenlehnen ist damit die Fahrzeugkarosserie vorteilhafterweise auch zugsteif ausgebildet. Bei beiden Ausführungsarten können durch die erfindungsgemäßen Einrichtungen unter Umständen Verstärkungen an den Karosseriewandungen im Bereich der Rückenlehnen vermindert werden. Dabei ist die Querversteifung der Karosserie durch die erfindungsgemäßen Mittel in sehr einfacher und kostengünstiger Weise durchführbar sowie robust und kaum störanfällig im Betriebseinsatz und auch nachrüstbar. Durch die als Keilelemente ausgebildeten Anlageelemente können vorteilhafterweise große Fertigungstoleranzen - beispielsweise von etwa ± 3 mm - an den Bauteilen ausgeglichen werden.

Zweckmäßigerweise ist das Keilelement an der Rückenlehne vorgesehen und wird durch eine Druckfeder in Fahrzeuglängsrichtung verlagert, so daß das Keilelement bei bloßem Verschwenken der Rückenlehne in die Gebrauchslage mit dem an der Karosseriewandung vorgesehenen Anlagebolzen reibschlüssig zusammenwirkt. Hierfür ist die außenliegende Keilfläche zur Fahrzeuglängsmittelebene hin geneigt und schneidet sich mit dieser hinter der Rückenlehne. Damit das Keilelement hierbei optimal geführt wird, ist es auf einem in Fahrzeuglängsrichtung verlaufenden Gleitbolzen verschiebbar geführt, der seinerseits in Tragwinkeln der Rückenlehne angebracht ist (Merkmale der Patentansprüche 2 bis 4).

Gemäß dem Merkmal des Patentanspruchs 5 hat der an der Karosseriewandung befestigte Anlagebolzen eine der Rückenlehne zugewandte Kalotte. Diese wirkt in Gebrauchslage der Rückenlehne mit dem Keilelement zusammen, wobei durch die Kalotte unabhängig von vorhandenen Fertigungstoleranzen eine Punktberührung zwischen den Teilen gewährleistet ist.

Durch die gemeinsame Lagerung der Rückenlehnenteile einer Rücksitzbank oder der Rückenlehnen zweier nebeneinanderliegender Sitze an einem fahrzeugaufbaufesten Schwenklager ist gewährleistet, daß in Gebrauchslage der Rückenlehnen jeweils eine Kraftwirklinie von den Karosseriewandungen über die Rückenlehnen in deren Schwenklager verlauft und damit eine Querversteifung der Karosserie gegeben ist (Merkmale des Patentanspruchs 6).

Ein Ausführungsbeispiel der Erfindung ist in der Zeichnung dargestellt und wird im folgenden erläutert. Es zeigt:
- Figur 1: eine perspektivische Ansicht der Rücksitzbank eines Kombifahrzeugs, von der ein Rückenlehnenteil nach vome geschwenkt ist,
- Figur 2: eine vergrößerte Einzelansicht in Pfeilrichtung A von Figur 1.

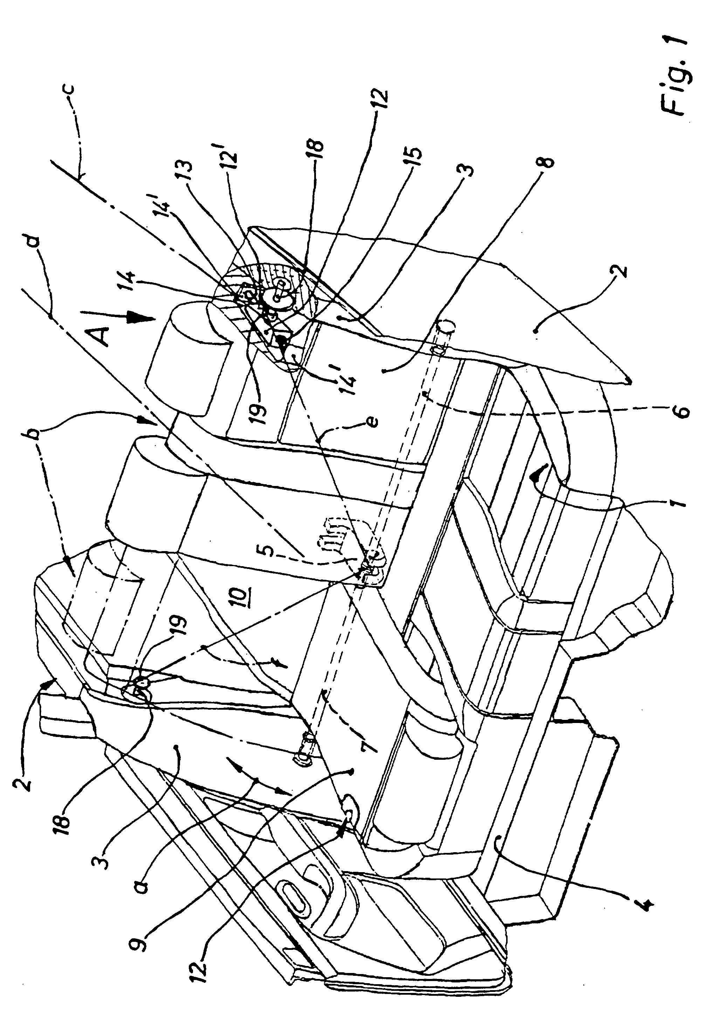

Das in Figur 1 teilweise dargestellte Kombifahrzeug hat eine sich über seine Breite erstreckende Rücksitzbank 1, die mit ihren beiden Stirnseiten jeweils an ein fahrzeugaufbaufestes Seitenteil 3 angrenzt, das seinerseits an einer Karosserieseitenwand 2 liegt. Ferner ist im Bereich des Fahrzeugbodens 4 sowie nahe am hinteren Rand der Rücksitzbank 1 ein Schwenklager 5 befestigt, das zur Aufnahme zweier miteinander fluchtender Lagerwellen 6 und 7 dient. Diese sind an ihren gegenüberliegenden Endabschnitten jeweils von einem Seitenteil 3 aufgenommen. Dabei ist an der Lagerwelle 6 ein Rückenlehnenteil 8 und an der Lagerwelle 7 ein Rückenlehnenteil 9 der Rücksitzbank 1 in den Richtungen des Doppelpfeils a schwenkbar gelagert; die Rückenlehnenteile 9 und 8 weisen eine Breite von etwa ein Drittel zu zwei Drittel der Breite der Rücksitzbank 1 auf.

Der Rückenlehnenteil 8 ist in der in Figur 1 dargestellten, etwa lotrechten Gebrauchslage b über eine nicht dargestellte Verriegelungsvorrichtung mit dem Seitenteil 3 verriegelt, während der Rückenlehnenteil 9 zur Vergrößerung des Laderaums 10 des Kombifahrzeugs nach vorne auf die Rücksitzbank 1 geschwenkt ist. In der Gebrauchslage b (mit strichpunktierten Linien dargestellt) ist auch der Rückenlehnenteil 9 mit dem Seitenteil 3 verriegelt.

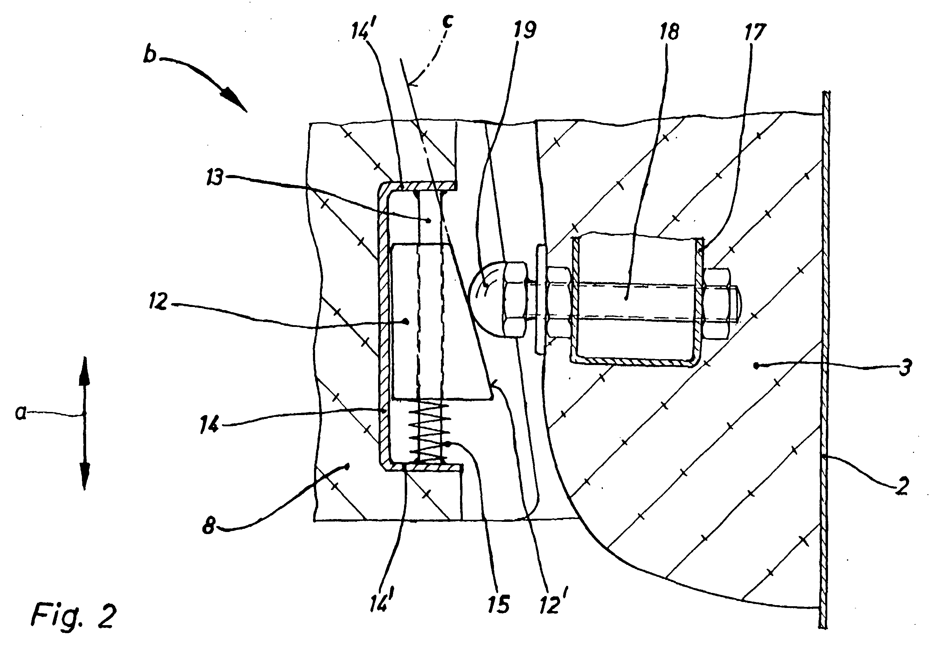

Die Rückenlehnenteile 8 und 9 weisen an ihrem obenliegenden sowie den Seitenteilen 3 zugewandten Randbereichen jeweils ein Keilelement 12 auf, das auf einem in Gebrauchslage b der Rückenlehnenteile 8 und 9 in Fahrzeuglängsrichtung verlaufenden Gleitbolzen 13 längsverschiebbar geführt ist, wie die Figuren 1 und 2 zeigen. Dabei ist der Gleitbolzen 13 an seinen Endabschnitten an den Tragwinkeln 14' eines Rahmenteils 14 befestigt, das sich an einem ecksteif ausgebildeten, etwa längs den Umfangsrändern der Rahmenteile 8 und 9 verlaufenden Rückenlehnenrahmen befindet. Wie insbesondere in Figur 2 ersichtlich, liegt an einem Tragwinkel 14' des Rahmenteils 14 eine den Gleitbolzen 13 umgebende Druckfeder 15 an, die mit Vorspannung gegen das Keilelement 12 wirkt. In Gebrauchslage b der Rückenlehnenteile 8 und 9 ist die Ebene c der Keilfläche 12' des Keilelements 12 zur Fahrzeuglängsmittelebene d hin geneigt und läuft mit dieser hinter den Rückenlehnenteilen 8 und 9 zusammen.

Wie Figur 2 zeigt, ist an einem Rahmenteil 17 der fahrzeugaufbaufest angebrachten Seitenteile 3 jeweils ein Anlagebolzen 18 festgeschraubt, wobei die beiden Anlagebolzen 18 miteinander fluchten; am freien Ende der Anlagebolzen 18 ist jeweils eine dem Fahrzeuginnenraum zugewandte Kalotte 19 ausgebildet. Diese befindet sich in Gebrauchslage b der Rückenlehnenteile 8 und 9 im Mittelbereich der Höhenerstreckung der Keilelemente 12, die in der erwähnten Gebrauchslage b der Rückenlehnenteile 8 und 9 durch die Wirkung der sich am Tragwinkel 14' des Rahmenteils 14 abstützenden Druckfeder 15 gegen die Kalotte 19 des Anlagebolzens 18 reibschlüssig gepreßt werden. In Gebrauchslage b der beiden Rückenlehnenteile 8 und 9 sind Kraftwirklinien e und f gebildet (in Figur 1 mit strichpunktierten Linien dargestellt), die vom Bereich der Anlagebolzen 18 in das Schwenklager 5 verlaufen. Nachdem die Rückenlehnenrahmen der Rückenlehnenteile 8 und 9 ecksteif ausgebildet sind, werden etwa in Karosseriequerrichtung wirkende Druckkräfte von den Anlagebolzen 18 über die Keilelemente 12, die Rückenlehnenteile 8 und 9 sowie deren Lagerwellen 6 und 7 in das Schwenklager 5 eingeleitet, wodurch das Schwingungsverhalten der Karosseriestruktur der Karosserie des Kombifahrzeugs verbessert wird; denn erwiesenermaßen entstehen hierbei vergleichsweise kleinere Schwingungsamplituden.

Die Neigung der Ebene c der Keilfläche 12' des Keilelements 12 in bezug auf die Fahrzeuglängsmittelebene d einerseits und die Längserstreckung des Keilelements 12 andererseits sind derart bemessen, daß vorhandene Fertigungstoleranzen, die im vorliegenden Ausführungsbeispiel etwa ± 3 mm an jedem Rückenlehnenteil 8, 9 betragen, durch die Keilelemente 12 ausgeglichen werden, da diese beim Hochschwenken der Rückenlehnenteile 8 und 9 in die etwa lotrechte Gebrauchslage b durch die Wirkung der Druckfeder 15 stets reibschlüssig mit der Kalotte 19 der Anlagebolzen 18 zusammenwirken. Bei Einleitung von Vibrationen in die Karosserie können sich hierdurch die Keilelemente 12 selbsttätig nachstellen, wodurch durch die sich dabei aufbauende Vorspannung in den zusammenwirkenden Teilen auch Zugkräfte in Karosseriequerrichtung ausgeglichen werden.

## Patentansprüche

1. Sitzanordnung in einem Kraftfahrzeug, die aus einer Rücksitzbank (1) mit einer zweiteiligen Rückenlehne (8, 9) oder aus nebeneinanderliegenden Sitzen mit jeweils einer Rückenlehne besteht, wobei wenigstens eine Rückenlehne (8 oder 9) in Fahrzeuglängsrichtung verschwenkbar und in etwa lotrechter Gebrauchslage (b) mit der zugewandten Karosseriewandung (2) verriegelbar ist,
**dadurch gekennzeichnet, dass** an der Karosseriewandung und an der Rückenlehne (8 oder 9) jeweils ein Anlageelement vorgesehen ist, wobei von den Anlageelementen wenigstens ein Anlageelement als ein Keilelement (12) ausgebildet und mindestens ein Anlageelement federbelastet verschiebbar ist, wobei ferner in Gebrauchslage (b) der Rückenlehne die Anlageelemente reib- oder formschlüssig zusammenwirken.

2. Sitzanordnung nach Anspruch 1,
**dadurch gekennzeichnet, dass** das Keilelement (12) federbelastet verschiebbar und an der Rückenlehne vorgesehen ist, wobei die Ebene (c) der Keilfläche (12') des Keilelements in Gebrauchslage (b) der Rückenlehne zur Fahrzeuglängsmittelebene (d) hin geneigt ist und mit dieser hinter der Rückenlehne zusammenläuft.

3. Sitzanordnung nach Anspruch 2,
**dadurch gekennzeichnet, dass** das Keilelement (12) längs einer an der Rückenlehne (8 und 9) vorgesehenen, in deren etwa lotrechten Gebrauchslage (b) in Fahrzeuglängsrichtung verlaufenden Gleitbahn verschiebbar geführt ist, wobei sich an der Rückenlehne eine Druckfeder (15) abstützt, die mit Vorspannung gegen das Keilelement wirkt.

4. Sitzanordnung nach Anspruch 3, **dadurch gekennzeichnet, dass** das Keilelement (12) in etwa lotrechter Gebrauchslage (b) der Rückenlehnenteile (8 und 9) auf einem etwa in Fahrzeuglängsrichtung verlaufenden Gleitbolzen (13) verschiebbar geführt ist, der an seinen Endabschnitten von einem an den Rückenlehnenteilen (8 und 9) vorhandenen Rahmenteil (14) mit Tragwinkeln (14') gehalten ist.

5. Sitzanordnung nach Anspruch 1, **dadurch gekennzeichnet, dass** an den beiden fahrzeugaufbaufesten, jeweils an eine Karosseriewandung (2) angrenzenden Seitenteilen (3) jeweils ein Anlagebolzen (18) befestigt ist, der eine den Rückenlehnenteilen (8 und 9) zugewandte Kalotte (19) aufweist, die in Gebrauchslage (b) der Rückenlehnenteile mit dem an diesen jeweils vorgesehenen Keilelement (12) reibschlüssig zusammenwirkt.

6. Sitzanordnung nach Anspruch 1, **dadurch gekennzeichnet, dass** die beiden Rückenlehnenteile (8 und 9) der Rücksitzbank (1) - oder die Rückenlehne zweier nebeneinander liegender Sitze - an einem gemeinsamen, fahrzeugaufbaufesten Schwenklager (5) über jeweils eine Lagerwelle (6 und 7) schwenkbar gelagert sind.

## Revendications

1. Aménagement de siège dans un véhicule automobile, qui comprend une banquette arrière (1) avec un dossier en deux parties (8, 9), ou plusieurs sièges avec chacun un dossier et disposés côte à côte, au moins un dossier (8 ou 9) pouvant basculer selon la direction longitudinale du véhicule et être verrouillé, dans sa position d'utilisation (b) sensiblement verticale, sur la paroi de carrosserie (2) en regard,
**caractérisé en ce qu'**
il est prévu un élément d'appui sur la paroi de la carrosserie et sur le dossier (8 ou 9) respectivement, et parmi ces éléments d'appui un au moins est constitué par un élément en coin (12) et un au moins peut coulisser sous la contrainte d'un ressort, les éléments d'appui coopérant avec verrouillage par friction ou par combinaison de formes quand le dossier est en position d'utilisation (b).

2. Aménagement de siège selon la revendication 1,
**caractérisé en ce que**
l'élément en coin (12) peut coulisser sous l'action d'un ressort et il est prévu sur le dossier, le plan (c) de la portée en coin (12') de l'élément en coin, quand le dossier est en position d'utilisation (b) étant incliné par rapport au plan longitudinal médian (d) qu'il rencontre derrière le dossier.

3. Aménagement de siège selon la revendication 2,
**caractérisé en ce que**
l'élément en coin (12) peut coulisser en étant guidé le long d'une piste de glissement prévue sur le dossier (8 ou 9) et orientée selon la direction longitudinale du véhicule quand le dossier est en position d'utilisation (b) sensiblement verticale et sur ce dossier s'appuie un ressort de poussée (15) exerçant une précontrainte sur l'élément en coin.

4. Aménagement de siège selon la revendication 3,
**caractérisé en ce que**
l'élément en coin (12), quand les parties de dossier (8 et 9) sont dans leur position d'utilisation (b) sensiblement verticale, peut coulisser sur une tige de glissement (13) qui est orientée à peu près selon la direction longitudinale du véhicule et qui est maintenue à ses extrémités par une partie de cadre (14) existant dans les parties de dossier (8 et 9) et présentant des cornières porteuses (14').

5. Aménagement de siège selon la revendication 1,
**caractérisé en ce que**
sur chacune des deux parties latérales (3) solidaires de la structure du véhicule et situées chacune le long d'une paroi de carrosserie (2), est fixée une tige d'appui (18) portant du côté d'une des parties de dossier (8 et 9) une calotte (19) qui coopère, quand les parties de dossier sont en position d'utilisation (b), avec l'élément en coin (12) prévu sur cette partie, avec verrouillage par friction.

6. Aménagement de siège selon la revendication 1,
**caractérisé en ce que**
les deux parties de dossier (8 et 9) ou la banquette (1) ou les dossiers de deux sièges disposés côte à côte, sont montés basculants sur un palier de basculement (5) commun, solidaire de la structure du véhicule, par l'intermédiaire chacun d'un arbre de palier (6 et 7).

## Claims

1. An arrangement of seating in a motor vehicle which comprises a rear bench seat (1) with a two-part seat back (8, 9) or adjacently positioned seats each with a seat back, whereby at least one seat back (8 or 9) can be pivoted in the longitudinal direction of the vehicle and can be locked in a somewhat vertical position of use (b) to the facing wall of the bodywork (2),
**characterised in that** an abutment element is provided on the bodywork wall and on the seat back (8 or 9) in each case, whereby at least one abutment element of the abutment elements is formed as a wedge element (12) and at least one abutment element can slide against spring loading, whereby further in the position of use (b) of the seat back the abutment elements operate together in frictional or positive engagement.

2. A seating arrangement according to claim 1,
**characterised in that** the wedge element (12) is moveable and spring loaded and provided on the seat back, whereby the plane (c) of the wedge surface (12') of the wedge element is inclined towards the longitudinal central plane (d) in the position of use (b) of the seat back and runs together with this behind the seat backs.

3. A seating arrangement according to claim 2,
**characterised in that** the wedge element (12) is guided so that it can move along a sliding track running in the longitudinal direction of the vehicle provided on the seat backs (8 and 9) in their approximately vertical position of use (b), whereby a compression spring (15) is supported on the seat backs which operates with pre-tension against the wedge element.

4. A seating arrangement according to claim 3,
**characterised in that** in the somewhat vertical position of use (b) of the sections of the seat back (8 and 9) the wedge element (12) is guided so that it can slide on a slide bolt (13) running approximately in the longitudinal direction of the vehicle, whose end sections are retained on the bearing angles (14') of a frame section (14) present on the seat back parts (8 and 9).

5. A seating arrangement according to claim 1,
**characterised in that** an abutment bolt (18) is fastened in each case to a side part (3) bordering a bodywork wall (2) in each case, which has a dome headed nut (19) facing the seat backs (8 and 9), which in the position of use (b) of the seat back parts operates together in a frictional engagement with the wedge element (12) provided in each case upon it.

6. A seating arrangement according to claim 1,
**characterised in that** the two seat back parts (8 and 9) of the rear bench seat (1) - or the seat backs of two adjacently positioned seats - are mounted on a bearing shaft (6 and 7) on a common pivoting bearing (5) firmly fixed to the vehicle chassis.
